# EUROPÄISCHE PATENTSCHRIFT

(11) **EP 1 705 405 B1**
(45) Veröffentlichungstag und Bekanntmachung des Hinweises auf die Patenterteilung: **16.01.2008**
(21) Anmeldenummer: 06001645.8
(22) Anmeldetag: 26.01.2006
(51) Int. Cl.: F16H 55/18

(54) **Verfahren der Einstellung eines Verdrehflankenspiels**
Method of adjusting a tooth flank clearance
Procédé d'ajustage d'un jeu de flancs des dentes

(30) Priorität: 24.03.2005 DE 102005013867
(43) Veröffentlichungstag der Anmeldung: 27.09.2006
(73) Patentinhaber: Bayerische Motoren Werke Aktiengesellschaft, 80809 München (DE); Kollmann, Helga, 8664 Veitsch (AT); Kollmann, Wolfgang, 8664 Veitsch (AT)
(72) Erfinder: Kollmann, Helga, 8664 Veitsch (AT); Frais, Hannes, 8663 Veitsch (AT); Kollmann, Wolfgang, 8664 Veitsch (AT); Gruber, Georg, 3354 Wolfsbach (AT)
(74) Vertreter: Söllner, Udo

(56) Entgegenhaltungen:
- DE-A1- 10 062 241
- PATENT ABSTRACTS OF JAPAN Bd. 005, Nr. 076 (M-069), 20. Mai 1981 (1981-05-20) & JP 56 024257 A (YAMAHA MOTOR CO LTD), 7. März 1981 (1981-03-07)

## Beschreibung

Die vorliegende Erfindung betrifft nach dem Oberbegriff des Anspruchs 1 ein Verfahren zur Einstellung eines Verdrehflankenspiels miteinander kämmender Verzahnungspartner mittels einer lösbaren Beschichtung, die im Zahnzwischenraum der zur Spieleinstellung gegeneinander zustellbaren Verzahnungspartner in einer dem vorgesehenen Verdrehflankenspiel weitgehend entsprechenden Schichtdicke aufgebracht wird.

Durch Geräuschminderungsmaßnahmen an den verschiedenen Lärmquellen des Fahrzeugs bedingt durch Einsparmaßnahmen, Gesetzgebung und auch steigende Komfortansprüche der Benutzer solcher Fahrzeuge treten Getriebegeräusche durch ihre Charakteristik bei bestimmten Betriebszuständen immer mehr als Störquelle in den Vordergrund. Ursache solcher Getriebegeräusche können Losteilschwingungen sein von nicht unter Last stehenden Bauteilen, die durch Torsionsschwingungen der Getriebeeingangswelle zum Singen, Klappern und Rasseln angeregt werden.

Eine getriebeinterne Maßnahme zur Geräuschverringerung kann die Optimierung von Parametern der Verzahnungspartner sein und hier wiederum die Einstellung des Verdrehflankenspiels der genannten miteinander kämmenden Verzahnungspartner. Wird nämlich das Verdrehflankenspiel zu gering, so können die Verzahnungspartner dazu neigen, zu "singen", wohingegen bei einem zu großen Verdrehflankenspiel die Verzahnungspartner dazu neigen, zu "rasseln". Das Verdrehflankenspiel wird dabei zwischen zwei einander gegenüberliegenden Zahnflanken der Verzahnungspartner Festrad und Losrad oder antreibendes und angetriebenes Rad gemessen. Liegt nun das Verdrehflankenspiel außerhalb der für das "Singen" oder "Rasseln" verantwortlichen Spielgrenzen, so breiten sich die Geräusche über die Wellen und Lager des Getriebes aus und regen somit das Getriebegehäuse zu Schwingungen an. Das Getriebegehäuse wiederum strahlt diese Schwingungen als Luftschall ab und über Körperschallübertragungswege, wie beispielsweise die Getriebeaufhängung breiten sich die Schwingungen in der Karosserie aus und treffen schließlich auf die Fahrzeuginsassen, die derartige Geräusche als negativ und komfortmindernd empfinden.

Vorstehend wurde ganz allgemein von Verzahnungspartnern gesprochen, da die vorliegende Erfindung nicht auf die Anwendung auf eine bestimmte Verzahnungsgeometrie aufweisende Verzahnungspartner, wie beispielsweise eine Stirnradstufe mit Evolventenverzahnung, beschränkt ist, sondern überall dort Anwendung finden kann, wo das Verdrehflankenspiel zwischen einander gegenüberstehenden Zahnflanken als Parameter für die Entstehung von Körperschallschwingungen maßgeblich ist. Ein Beispiel solcher Verzahnungspartner kann beispielsweise das zum Antrieb eines Massenausgleichsystems einer Brennkraftmaschine erforderliche Getriebe sein.

Es sind bereits Verfahren und Vorrichtungen bekannt geworden, die der Einstellung des Verdrehflankenspiels miteinander kämmender Verzahnungspartner dienen, wobei es sich hierbei teilweise um sehr aufwendige Vorrichtungen handeln kann, wie beispielsweise in der DE 11 80 596 B, die daher bei der Serienfertigung von bzgl. des Verdrehflankenspiels einzustellenden Getrieben, wie beispielsweise von Getrieben für das Massenausgleichsystem von Brennkraftmaschinen, erhebliche Kostennachteile hervorrufen.

Um nun der Anforderung einer schnellen Einstellung des Verdrehflankenspiels zur Spieleinstellung gegeneinander zustellbarer Verzahnungspartner Rechnung zu tragen, ist anhand der DE 199 55 474 C1 bereits ein Verfahren bekannt geworden, nach dem in den Zahnzwischenraum der Verzahnungspartner eine Zwischenlage in der Form eines Folienstreifens oder eines Folienbandes aus einer Metallfolie oder einem Drahtgewebe gebracht wird und einer der Verzahnungspartner dann in Richtung zum anderen hin - beispielsweise achsparallel - so verschoben wird, bis die beiden Verzahnungspartner mit zwischengeordneter Zwischenlage spielfrei aufeinander liegen. Wird nun die Dicke der Zwischenlage so gewählt, dass sich das gewünschte Verdrehflankenspiel zwischen den Verzahnungspartnern einstellt, so ist ein Nachmessen des Verdrehflankenspiels nicht mehr erforderlich. Obwohl sich dieses Verfahren bereits bewährt hat, weist es doch in Sachen Automatisierung bei der Serienfertigung Probleme auf, da in der dem gewünschten Verdrehflankenspiel entsprechenden Dicke vorliegende Folienstreifen mit einer Materialstärke von beispielsweise 30 µm maschinell nur schwer handhabbar sind.

Anhand der den Oberbegriff des Anspruchs 1 bildenden DE 100 62 241 A1 ist ebenfalls ein Verfahren zur Erzielung eines gewünschten Verdrehflankenspiels bei einem Getriebe bekannt geworden. Nach diesem bekannten Verfahren wird zur Spieleinstellung eine entfernbare Beschichtung auf einem der Zahnräder zweier Verzahnungspartner aufgetragen, wobei die Beschichtung ein Gemisch umfasst, das ein Bindemittel und einen Füllstoff enthält. Dabei wird dieses Gemisch beispielsweise in Form eines Sprühauftrags an einem Sektorwinkel des Zahnrads von beispielsweise 140° aufgetragen. Dieses Gemisch kann dann einer Wärmebehandlung zum Ausdampfen eines Lösungsmittels unterzogen werden, sodass sich eine Beschichtung einstellt, die in der gewünschten Schicht den Zahnzwischenraum zweier gegenüberliegender Zahnflanken, also der Vorderflanke und der Rückflanke, bedeckt, sodass sich nach dem Zustellen des Gegenrads ein Kontakt zwischen der Vorderflanke eines Zahnes des feststehenden Zahnrads, den beiden Zahnflanken eines Zahnes des damit kämmenden Gegenrads und der Rückflanke des nächsten Zahnes des feststehenden Zahnrades einstellt über die dazwischen ausgebildete Beschichtung.

Dieses Verfahren hat sich in der Praxis bereits sehr gut bewährt, weist aber noch Raum für Verbesserungen auf, da es sich gezeigt hat, dass das somit erzielbare Verdrehflankenspiel nicht in jedem Fall die zur Vermeidung von komfortmindernden Geräuschbelastungen erforderlichen Spielgrenzen aus Schichtdicke plus Schichtdickentoleranz einhält.

Das solchermaßen erzielbare Verdrehflankenspiel setzt sich nämlich additiv zusammen aus der Schichtdicke an der Vorderflanke, der Schichtdickentoleranz an der Vorderflanke, der Schichtdicke an der Rückflanke und der Schichtdickentoleranz an der Rückflanke.

Die Summe der beiden Schichtdicken soll im Idealfall das gewünschte Verdrehflankenspiel darstellen, wobei aber aufgrund der additiven Überlagerung zweier Schichtdickentoleranzwerte (Toleranzwert der Schichtdicke an der Vorderflanke plus Toleranzwert der Schichtdicke an der Rückflanke) Verdrehflankenspiele zustande kommen können, die das gesamte Toleranzfenster ausnutzen und somit eine Einengung der Toleranzgrenzen nicht möglich ist.

Ausgehend hiervon liegt der vorliegenden Erfindung nunmehr die Aufgabe zugrunde, das vorstehend genannte Verfahren dahingehend zu verbessern, dass die für das Vermeiden ungewünschter komfortmindernder Laufgeräusche der miteinander kämmenden Verzahnungspartner erforderlichen Verdrehflankenspiele mittels des Auftrags einer lösbaren Beschichtung minimiert werden können.

Die vorliegende Erfindung schafft nun zur Lösung dieser Aufgabe ein Verfahren nach dem Anspruch 1. Vorteilhafte Ausgestaltungen des Verfahren sind in den weiteren Ansprüchen beschrieben.

Die zur Lösung dieser Aufgabe geschaffene Erfindung betrifft ein Verfahren der Einstellung eines Verdrehflankenspiels miteinander kämmender Verzahnungspartner mittels einer lösbaren Beschichtung, die im Zahnzwischenraum der zur Spieleinstellung gegeneinander zustellbaren Verzahnungspartner in einer dem vorgesehenen Verdrehflankenspiel weitgehend entsprechenden Schichtdicke aufgebracht gebracht wird, wobei die Beschichtung ein Gemisch aus 5 bis 20 Gew.-% Polymermaterial, 5 bis 20 Gew.-% Festschmierstoff und bis zu etwa 75 Gew.-% Lösungsmittel, bezogen auf das Gesamtgewicht des Gemisches umfasst.

Es hat sich gezeigt, dass bei der vorstehend beschriebenen Zusammensetzung des Gemisches höhere Schichtdicken als bei dem bekannten Gemisch erreicht werden können und gleichzeitig bei der Auftragung des Gemisches geringere Schichtdickentoleranzen realisiert werden können. Es ist dies von Vorteil, da sich herausgestellt hat, dass die bisher benutzte bekannte Zusammensetzung des Gemisches zu Schichtdickentoleranzen führen kann, die in Verbindung mit der gewünschten Schichtdicke zu einem breiteren Toleranzfenster führen, das für das Entstehen unerwünschter Geräuschentwicklung der miteinander kämmenden Verzahnungspartner verantwortlich sein kann.

Wenn das erfindungsgemäße Verfahren beispielsweise an einem Getriebe zur Ansteuerung eines Massenausgleichssystems eines nach dem Selbstzünderprinzip arbeitenden Verbrennungsmotors angewandt wird, so ist es zum Vermeiden von Singen bzw. Rasseln der Verzahnung erforderlich, einen Verdrehflankenspielbereich von etwa 30 µm bis etwa 50 µm einzuhalten, sodass die erforderliche Untergrenze des Verdrehflankenspiels bei etwa 30 µm liegt. Wird nun ein Gemisch aufgetragen, welches als Beschichtung eine Schichtdicke von 30 µm aufweist und liegt die erreichbare Schichtdickentoleranz bei mehr als 20 µm so stellt sich ein Verdrehflankenspiel ein, dessen oberer Grenzwert den oberen Verdrehflankenspielgrenzwert von 50 µm übertrifft, sodass die Gefahr eines Rasselns der miteinander kämmenden Verzahnungspartner in Form beispielsweise einer Stirnradstufe entsteht.

Es hat sich nun gezeigt, dass mit dem nach der Erfindung vorgesehenen Gemisch aus 5 bis 20 Gew.-% Polymermaterial und 5 bis 20 Gew.-% Festschmierstoff sowie bis zu etwa 75 Gew.-% Lösungsmittel eine Schichtdicke von beispielsweise 30 µm der fertigen Beschichtung realisiert werden kann mit der beispielsweise gewünschten Schichtdickentoleranz von 20 µm.

Nach einer Weiterbildung der Erfindung ist es vorgesehen, dass die Beschichtung im Zahnzwischenraum einander gegenüberliegender Zahnflanken eines Verzahnungspartners nur einseitig aufgebracht wird. Mit der nur einseitigen Aufbringung der Beschichtung an nur einer Zahnflanke, also beispielsweise den Vorderflanken oder den Rückflanken des antreibenden Zahnrads bzw. des angetriebenen Zahnrads lässt sich darüber hinaus der geforderte Verdrehflankspielbereich noch mit höherer Genauigkeit erreichen, da mit der nur einseitigen Beschichtungen der Betrag des Schichtdickentoleranzbereichs nur einseitig anfällt und damit nur einmal.

Nach dem bisherigen Verfahren wurde das Gemisch sowohl an Vorderflanken als auch Rückflanken der Zähne eines Zahnradsegments aufgetragen, wodurch sich die Verdrehflankenspieltoleranzen der Beschichtung an den Vorderflanken und den Rückflanken addiert haben und somit zu einem unzulässigen Verlassen des vorgesehenen bzw. gewünschten Verdrehflankenspielbereichs beigetragen haben. Diesem nach der Erfindung nur einseitig vorgesehenen Aufbringen des Gemisches kommt das geschaffene Gemisch entgegen, da damit - verglichen mit den bisherigen Verfahren - höhere Schichtdicken bei gleichzeitig geringerer Schichtdickentoleranz realisierbar sind.

Um nun eine weitere leichtere Handhabbarkeit der Beschichtung zu erreichen, ist es nach der Erfindung vorgesehen, dass sich diese durch Abrieb der kämmenden Verzahnungspartner löst. Es bedeutet dies mit anderen Worten, dass sich die Beschichtung durch das Abwälzen der Zahnflanken einander gegenüberliegender Verzahnungspartner selbsttätig löst, beispielsweise in der Form kleinster Partikel, die den Schmierstoffkreislauf des Motors und/oder Getriebes nicht negativ beeinflussen. In dieser Hinsicht ist es von Vorteil, dass als Füllstoff des Gemisches Festschmierstoff in der Form beispielsweise von Graphit oder Molybdänsulfidpartikeln oder PTFE Partikeln vorgesehen ist, durch die einerseits eine für die Spieleinstellung erforderliche inkompressible Beschichtung realisierbar ist und durch den andererseits aufgrund seiner Eigenschmierwirkung kein negativer Einfluss auf den Lauf des Motors und/oder Getriebes ausgeht.

Bei dem Polymermaterial kann es sich um Kunstharz handeln, das in Verbindung mit dem Festschmierstoff auf den Zahnflanken der Verzahnungspartner mit einstellbarem Polymerisationsgrad eine inkompressible Beschichtung ergibt. So kann das Polymermaterial beispielsweise ausgewählt werden aus Phenolharzen, Aminharzen, Alkydharzen, Polyvinylacetal, Epoxidharzen, Polyurethanharzen, Polyesterharzen, chloriertem Polypropylen, Ketonharzen, Acrylharzen, Styrol-Butadien-Copolymeren, Polyamiden, Polyimiden, Polyesterimiden, Polyetherimiden und Polyamidimiden.

Nach einer bevorzugten Ausführungsform wird als Polymermaterial Polyamidimid eingesetzt, welches in Verbindung mit Molybdänsulfid eine inkompressible tragfähige Beschichtung auf den Zahnflanken der Verzahnungspartner ergibt und sich aber durch Abrieb der kämmenden Verzahnungspartner in der Form kleinster Partikel leicht löst.

Bei dem nach der Erfindung vorgesehenen Lösungsmittel kann es sich um ein Lösungsmittelgemisch handeln, welches insbesondere etwa 2,5 Gew.-% 2-Methyl-2-pentanol-4-on, etwa 20,5 Gew.-% Dimethlybenzol, etwa 1,5 Gew-% Toluol und etwa 50,5 Gew.-% N-Methlypyrrolidion, bezogen auf das Gesamtgewicht des Gemisches, enthält. Wird nun ein Gemisch mit diesem Lösungsmittelgemisch und den nach der Erfindung vorgesehenen 5 bis 20 Gew.-% Polymermaterial in der Form von beispielsweise einer Polyamidimid-Vorstufe und 5 bis 20 Gew.-% Molybdänsulfid bereitgestellt, so lässt sich dieses Gemisch mittels eines Sprühverfahrens mit gleichmäßiger und homogener Schichtdicke und niedriger Schichtdickentoleranz auf den Zahnflanken eines der Verzahnungspartner auftragen.

Es ist aber nach der Erfindung auch vorgesehen, dass die vorstehend genannten prozentualen Anteile der Bestandteile des Lösungsmittelgemisches in Abhängigkeit des Anteils an Polymermaterial und Festschmierstoff und der vorgesehenen bzw. gewünschten Viskosität des Gemisches bestimmt werden.

Das solchermaßen bereitgestellte Gemisch wird vorzugsweise als Lösung des Polymermaterials aufgebracht, wobei der Festschmierstoff in der Lösung suspendiert ist und das Lösungsmittel mittels Erwärmen entfernt wird. Der sich durch die Zufuhr von Wärme einstellende Temperaturbereich des aufgebrachten Gemisches ist nach der vorliegenden Erfindung im Bereich von etwa 35°C bis etwa 240°C vorgesehen. In diesem Temperaturbereich kann eine Trocknung und Härtung des Gemisches mit gewünschtem Polymerisationsgrad erreicht werden, sodass beispielsweise im niedrigen Temperaturbereich ein geringerer Polymerisationsgrad mit einer leichtgängig abgängigen Beschichtung realisiert werden kann.

Nach einer Weiterbildung der Erfindung ist es vorgesehen, dass das Gemisch auf ein Zahnsegment mit einem Sektorwinkel von etwa 30 Grad bis etwa 360 Grad auf Zahnflanken einseitig aufgebracht wird. Das nach der Erfindung vorgesehene Gemisch kann daher am vollen Umfang eines Verzahnungspartners an den Zahnflanken jeweils nur einseitig aufgebracht werden, oder auch nur an einem kleinen Winkelsegment von beispielsweise 30 Grad. Wird nun einer der Verzahnungspartner zur Spieleinstellung mit dem mit der Beschichtung versehenen Verzahnungspartner in Anlage gebracht, sodass die Zahnflanken des ersten Verzahnungspartners auf den mit der Beschichtung versehenen Zahnflanken des zweiten Verzahnungspartners in Anlage kommen, so kann der nach der Erfindung vorgesehene kleine Sektorwinkel von 30 Grad, an dem an den Zahnflanken des beschichteten Verzahnungspartners einseitig die Beschichtung ausgebildet wird, schon ausreichend sein, um das gewünschte Verdrehflankenspiel einzustellen.

Durch den nach der Erfindung vorgesehenen Anteil des Polymermaterials von 5 bis 20 Gew.-% und des Festschmierstoffs von 5 bis Gew.-% lässt sich eine leicht abgängige und trotzdem inkompressible Beschichtung mit einer Schichtdicke von etwa 10 µm bis etwa 100 µm erreichen, wobei eine Schichtdicke von etwa 30 µm bei der Anwendung an dem Getriebe für Massenausgleichsystem einer Verbrennungskraftmaschine bevorzugt wird.

Wie es vorstehend bereits erwähnt wurde, zeichnet sich das nach der Erfindung vorgesehene Gemisch insbesondere dadurch aus, dass es mit einer homogenen und niedrigen Schichtdickentoleranz von beispielsweise etwa 20 µm aufgebracht werden kann. Wenn es vorgesehen ist, dass eine Schichtdicke der Beschichtung realisiert werden soll die größer ist, als die durch einen einmaligen Sprühauftrag erreichbare Schichtdicke, so kann das Aufbringen des Gemisches erforderlichenfalls mehrfach durchgeführt werden mit einem zwischengeschalteten Trocknungs- und/oder Aushärtvorgang des bereits aufgetragenen Gemisches.

Um eine für die Zeitdauer der Einstellung des Verdrehflankenspiels gut haftende Beschichtung an den Zahnflanken zu erreichen, ist es nach der Erfindung vorgesehen, dass das Gemisch auf ein haftgrundbehandeltes, insbesondere phosphatiertes Zahnradsegment aufgebracht wird. Zur Spieleinstellung wird dann der zustellbare Verzahnungspartner spielfrei mit dem mit der Beschichtung versehenen Verzahnungspartner in einen kämmenden Eingriff gebracht, sodass die Zahnflanken des bewegbaren Verzahnungspartner an der ausgehärteten Beschichtung mit einer diese Beschichtung nicht beschädigenden Flächenpressung anliegen und auf diese Weise das gewünschte Verdrehflankenspiel eingestellt werden kann.

Die Erfindung wird im Folgenden anhand der Zeichnung näher erläutert. Diese zeigt in:
Fig. 1 eine schematische Darstellung der Zähne zweier in Anlage gebrachter Verzahnungspartner mit an einem Zahnzwischenraum an der Vorderflanke und der Rückflanke angebrachter Beschichtung nach dem Stand der Technik; und
Fig. 2 eine Darstellung ähnlich Fig. 1 mit nur an einer Zahnflanke angebrachter Beschichtung nach der vorliegenden Erfindung.

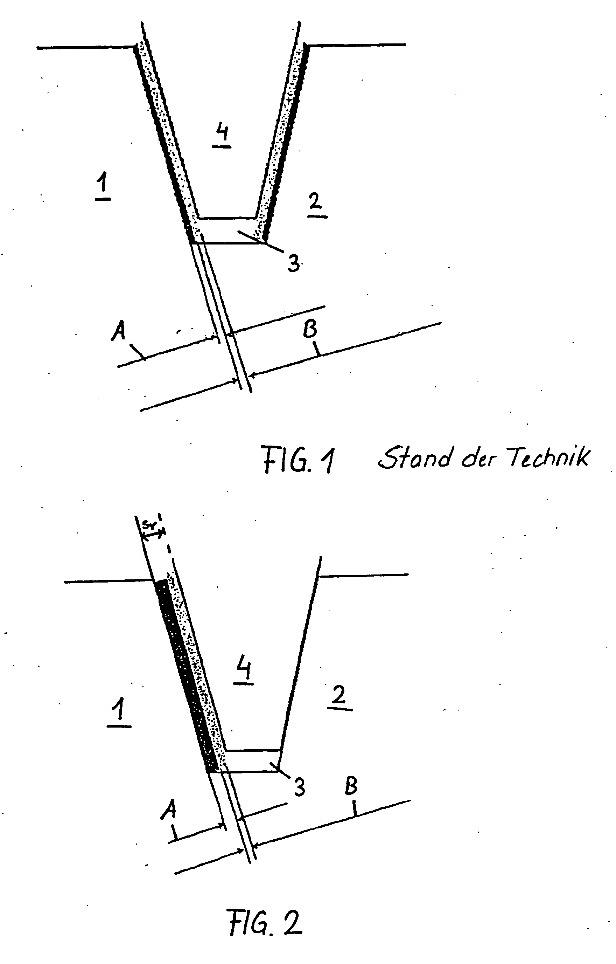

Fig. 1 der Zeichnung zeigt in einer schematischen Darstellung zwei Zähne 1, 2 eines ersten Verzahnungspartners in der Form beispielsweise eines Zahnrads einer Stirnradstufe zum Antrieb eines Massenausgleichsystems einer Verbrennungskraftmaschine. Zwischen den beiden Zähnen 1, 2 wird ein Zahnzwischenraum 3 gebildet, in den ein Zahn 4 eines zweiten Verzahnungspartner, also beispielsweise des angetriebenen Zahnrads der Stirnradstufe eingreift.

Das Verdrehflankenspiel ist der lichte Abstand zwischen einer Zahnflanke eines Zahnrads, also beispielsweise des Zahnrads 1 und der gegenüberliegenden Zahnflanke des damit kämmenden Zahnrads, also des Zahnrades 4 und wird in Fig. 2 der Zeichnung mit s_{V} bezeichnet.

Nach dem in Fig. 1 der Zeichnung dargestellten bekannten Verfahren wird ein Gemisch aus einem Bindemittel und einem Füllstoff beidseitig des Zahnzwischenraums 3 (der Zahnlücke zwischen den Zähnen 1 und 2) aufgetragen, also sowohl an der Vorderflanke des Zahns 1, als auch an der Rückflanke des Zahns 2. Gewünscht wird dabei eine Beschichtung mit einer Schichtdicke A, der sich aufgrund von Toleranzen beim Auftrag der bekannten Beschichtung eine Toleranzschichtdicke B überlagert. Diese bekannte Beschichtung ist sowohl an der Vorderflanke als auch an der Rückflanke des Zahnzwischenraums aufgetragen, sodass sich im Zahnzwischenraum zwei Schichten der Beschichtung befinden, denen additiv jeweils eine Toleranzschichtdicke überlagert ist. Damit gehen in das gewünschte Verdrehflankenspiel zwei Schichtdicken "A" und zwei Toleranzschichtdicken "B" ein, also auch zwei Toleranzschichtdicken "B".

Es hat sich nun gezeigt, dass es bei der Einstellung des Verdrehflankenspiel zwischen dem ersten Verzahnungspartner und dem zweiten Verzahnungspartner Absolutwerte des Verdrehflankenspiels ergeben, die aufgrund der Toleranzschichtdicken "B" außerhalb des vorgesehenen Verdrehflankenspielfensters liegen, sodass das schematisch in der Zeichnung dargestellte Getriebe bei zu niedrigem Verdrehflankenspiel zum Singen neigt und bei zu hohem Verdrehflankenspiel zum Rasseln.

Fig. 2 der Zeichnung zeigt nun in schematischer Darstellung eine Ausführungsform der Erfindung bei der im Zahnzwischenraum 3 zwischen der Vorderflanke des Zahnes 1 und der Rückflanke des Zahnes 2 nur an einer Zahnflanke eine Beschichtung in der Form des erfindungsgemäß vorgesehenen Gemisches aufgetragen wird.

Das gewünschte oder vorgesehene Verdrehflankenspiel sᵥ setzt sich aus der Schichtdicke "A" und der Toleranzschichtdicke "B" zusammen, sodass der Schichtdickentoleranzwert "B" in die Bestimmung der Gesamtschichtdicke und damit des Verdrehflankenspiels nur einfach eingeht.

Zur Ausbildung der in Fig. 2 der Zeichnung dargestellten Beschichtung wurde eine Polyamidimid-Vorstufe (Pyralin® der Firma DuPont Deutschland GmbH mit einem Anteil von 12,5 g in einer Lösung von 2,5 g 2-Methyl-2-pentanol-4-on und 20,5 g Dimethylbenzol und 1,5 g Toluol sowie 50,5 g N-Methlypyrrolidion verdünnt und gerührt.

Dann wurden 12,5 g MoS₂-Partikel mit einer durchschnittlichen Teilchengröße von 3 bis 5 µm dazugegeben und mittels eines Dispergiergeräts gut in der Lösung dispergiert. Die so entstandene Suspension wurde in eine Sprühpistole gegeben.

Ein phosphatiertes Zahnrad eines Getriebes wurde an einem Zahnsegment mit einem Sektorwinkel von 140 Grad aus einer Entfernung von etwa 20 cm an den Vorderflanken der Zähne des Zahnsegments besprüht und anschließend 20 Min lang bei 90°C getrocknet. Danach fand ein zweites Besprühen unter den oben genannten Bedingungen statt. Die Beschichtung wurde dann 60 Min bei 90°C getrocknet und gehärtet. Die Schichtdicke nach Trocknen und Härten betrug 30 µm. Nach Fixierung des zustellbaren Zahnrads löste sich diese Beschichtung nach 70 bis 100 Sekunden Probelauf des Getriebes in Form kleinster Partikel von dem Zahnrad ab.

Mit der erfindungsgemäß vorgesehenen Zusammensetzung des Gemisches können - die Beschichtung wird im Zahnzwischenraum nur einseitig d. h. an einer Zahnflanke aufgebracht - höhere Schichtdicken als mit der bekannten Gemischzusammensetzung erreicht werden bei gleichzeitig geringerer Schichtdickentoleranz. Durch die Abnahme der Schichtdickentoleranz wird es erreicht, die Beschichtung innerhalb des zur Erreichung des vorgesehenen Verdrehflankenspielfensters notwendigen Schichtdicke einzustellen. Zudem geht nach dem erfindungsgemäßen Verfahren der Schichtdickentoleranzwert nur einfach in die Bestimmung des Verdrehflankenspiels ein, sodass der Einfluss des Schichtdickentoleranzwertes auf das vorgesehene bzw. gewünschte Verdrehflankenspiel verglichen mit dem bekannten Verfahren deutlich verringert wurde.

Hinsichtlich vorstehend im Einzelnen nicht näher erläuterter Merkmale der Erfindung wird im Übrigen ausdrücklich auf die Ansprüche und die Zeichnung verwiesen.

## Patentansprüche

1. Verfahren zur Einstellung eines Verdrehflankenspiels miteinander kämmender Verzahnungspartner mittels einer lösbaren Beschichtung, die im Zahnzwischenraum (3) der zur Spieleinstellung gegeneinander zustellbaren Verzahnungspartner (1; 4) in einer dem vorgesehenen Verdrehflankenspiel (sᵥ) weitgehend entsprechenden Schichtdicke aufgebracht wird, **dadurch gekennzeichnet, dass** die Beschichtung ein Gemisch aus 5 bis 20 Gew.-% Polymermaterial, 5 bis 20 Gew.-% Festschmierstoff und bis zu etwa 75 Gew.-% Lösungsmittel, bezogen auf das Gesamtgewicht des Gemisches umfasst.

2. Verfahren nach Anspruch 1, **dadurch gekennzeichnet, dass** die Beschichtung im Zahnzwischenraum (3) einander gegenüberliegender Zahnflanken eines Verzahnungspartners (1, 2) einseitig aufgebracht wird.

3. Verfahren nach Anspruch 1 oder 2, **dadurch gekennzeichnet, dass** das Lösen der Beschichtung durch Abrieb der kämmenden Verzahnungspartner (1; 4) erfolgt.

4. Verfahren nach einem der vorstehenden Ansprüche, **dadurch gekennzeichnet, dass** das Polymermaterial ausgewählt wird aus Phenolharzen, Aminharzen, Alkydharzen, Polyvinylacetal, Epoxidharzen, Polyurethanharzen, Polyesterharzen, chloriertem Polypropylen, Ketonharzen, Acrylharzen, Styrol-Butadien-Copolymeren, Polyamiden, Polyimiden, Polyesterimiden, Polyetherimiden und Polyamidimiden.

5. Verfahren nach einem der vorstehenden Ansprüche, **dadurch gekennzeichnet, dass** der Festschmierstoff Graphit oder Molybdänsulfid oder PTFE ist.

6. Verfahren nach einem der vorstehenden Ansprüche, **dadurch gekennzeichnet, dass** das Lösungsmittel ein Lösungsmittelgemisch umfasst, welches etwa 2,5 Gew.-% 2-Methyl-2-pentanol-4-on, etwa 20,5 Gew.-% Dimethylbenzol, etwa 1,5 Gew-% Toluol und etwa 50,5 Gew.-% N-Methlypyrrolidion, bezogen auf das Gesamtgewicht des Gemisches, enthält.

7. Verfahren nach Anspruch 6, **dadurch gekennzeichnet, dass** die prozentualen Anteile der Bestandteile des Lösungsmittelgemisches in Abhängigkeit des Anteils an Polymermaterial und Festschmierstoff und der vorgesehenen Viskosität des Gemisches bestimmt werden.

8. Verfahren nach einem der vorstehenden Ansprüche, **dadurch gekennzeichnet, dass** das Gemisch als Lösung des Polymermaterials aufgebracht wird, wobei der Festschmierstoff in der Lösung suspendiert ist und das Lösungsmittel insbesondere mittels Erwärmen entfernt wird.

9. Verfahren nach einem der vorstehenden Ansprüche, **dadurch gekennzeichnet, dass** das Gemisch mittels eines Sprühvorgangs auf die Zahnflanken aufgebracht wird.

10. Verfahren nach einem der vorstehenden Ansprüche, **dadurch gekennzeichnet, dass** das aufgebrachte Gemisch bei einer Temperatur von etwa 35° Celsius bis etwa 240° Celsius behandelt wird.

11. Verfahren nach einem der vorstehenden Ansprüche, **dadurch gekennzeichnet, dass** das Gemisch auf ein Zahnsegment mit einem Sektorwinkel von etwa 30 Grad bis etwa 360 Grad auf Zahnflanken einseitig aufgebracht wird.

12. Verfahren nach einem der vorstehenden Ansprüche, **dadurch gekennzeichnet, dass** das Gemisch zur Bildung einer Beschichtung mit einer Schichtdicke von etwa 10 µm bis etwa 100 µm, insbesondere etwa 30 µm aufgebracht wird.

13. Verfahren nach einem der vorstehenden Ansprüche, **dadurch gekennzeichnet, dass** das Gemisch mit einer Schichtdickentoleranz von etwa 20 µm aufgebracht wird.

14. Verfahren nach Anspruch 12 oder 13, **dadurch gekennzeichnet, dass** das Aufbringen des Gemisches erforderlichenfalls mehrfach durchgeführt wird.

15. Verfahren nach einem der vorstehenden Ansprüche, **dadurch gekennzeichnet, dass** das Gemisch auf ein haftgrundbehandeltes, insbesondere phosphatiertes Zahnrad aufgebracht wird.

16. Verfahren nach einem der vorstehenden Ansprüche, **dadurch gekennzeichnet, dass** die gegeneinander zustellbaren Verzahnungspartner zur Spieleinstellung mit einer die ausgehärtete Beschichtung nicht beschädigenden Flächenpressung weitgehend spielfrei in Anlage gebracht werden.

## Claims

1. Method for adjusting the circumferential tooth face clearance of meshing toothed components by means of a soluble coating which is applied in the space (3) between the teeth of the toothed components (1; 4) which are adjustable in relation to one another to set the clearance with a coating thickness largely corresponding to the required circumferential tooth face clearance (sᵥ), **characterised in that** the coating comprises a mixture of 5 to 20 wt.% polymer material, 5 to 20 wt.% solid lubricant and up to approximately 75 wt.% solvent, related to the total weight of the mixture.

2. Method according to claim 1, **characterised in that** the coating is applied on one side in the space (3) between the opposing tooth faces of one toothed component (1, 2).

3. Method according to claim 1 or 2, **characterised in that** the coating is dissolved by abrasion of the meshing toothed components (1; 4).

4. Method according to one of the preceding claims, **characterised in that** the polymer material is selected from phenolic resins, amino resins, alkyde resins, polyvinyl acetal, epoxy resins, polyurethane resins, polyester resins, chlorinated polypropylene, ketone resins, acrylic resins, styrene-butadiene-copolymers, polyamides, polyimides, polyester imides, polyether imides and polyamide imides.

5. Method according to one of the preceding claims, **characterised in that** the solid lubricant is graphite or molybdenum sulphide or PTFE.

6. Method according to one of the preceding claims, **characterised in that** the solvent comprises a solvent mixture which contains approximately 2.5 wt.% 2-methyl-2-pentanol-4-on, approximately 20.5 wt.% dimethyl benzene, approximately 1.5 wt.% toluene and approximately 50.5 wt.% N-methylpyrrolidione, related to the total weight of the mixture.

7. Method according to claim 6, **characterised in that** the percentages of the components of the solvent mixture are determined according to the percentage of polymer material and solid lubricant and the required viscosity of the mixture.

8. Method according to one of the preceding claims, **characterised in that** the mixture is applied as a solution of the polymer material, the solid lubricant being suspended in the solution and the solvent being removed in particular by means of heating.

9. Method according to one of the preceding claims, **characterised in that** the mixture is applied to the tooth faces by means of a spraying operation.

10. Method according to one of the preceding claims, **characterised in that** the applied mixture is treated at a temperature of approximately 35° Celsius to approximately 240° Celsius.

11. Method according to one of the preceding claims, **characterised in that** the mixture is applied on one side to a tooth segment with a sector angle of approximately 30° to approximately 360° on tooth faces.

12. Method according to one of the preceding claims, **characterised in that** the mixture is applied to form a coating with a coating thickness of approximately 10 µm to approximately 100 µm, in particular approximately 30 µm.

13. Method according to one of the preceding claims, **characterised in that** the mixture is applied with a coating thickness tolerance of approximately 20 *µ*m.

14. Method according to claim 12 or 13, **characterised in that** the application of the mixture is carried out a plurality of times if necessary.

15. Method according to one of the preceding claims, **characterised in that** the mixture is applied to a toothed wheel which is treated with a wash primer, in particular phosphated.

16. Method according to one of the preceding claims, **characterised in that** to set the clearance the toothed components which are adjustable in relation to one another are brought into contact largely free of play with a surface pressure which does not damage the hardened coating.

## Revendications

1. Procédé d'ajustage d'un jeu primitif de partenaires d'engrènement engrenant l'un avec l'autre au moyen d'un revêtement détachable, appliqué dans l'entredent (3) des partenaires d'engrènement (1 ; 4) pouvant être approchés l'un contre l'autre pour l'ajustage du jeu dans une épaisseur de couche correspondant en grande partie au jeu primitif prévu (sᵥ), **caractérisé en ce que** le revêtement comporte un mélange de 5 à 20 % en poids de matière polymère, 5 à 20 % en poids de lubrifiant solide et jusqu'à environ 75 % en poids de solvant, par rapport au poids total du mélange.

2. Procédé selon la revendication 1, **caractérisé en ce que** le revêtement est appliqué d'un côté dans l'entredent (3) des flancs de dents opposés d'un partenaire d'engrènement (1, 2).

3. Procédé selon la revendication 1 ou 2, **caractérisé en ce que** le détachement du revêtement se produit par abrasion des partenaires d'engrènement (1 ; 4) engrenant.

4. Procédé selon l'une quelconque des revendications précédentes, **caractérisé en ce que** la matière polymère est choisie parmi les résines phénoliques, les résines amines, les résines alkyles, les acétals polyvinyliques, les résines époxydiques, les résines polyuréthaniques, les résines polyester, le polypropylène chloré, les résines cétoniques, les résines acryliques, les copolymères styrène-butadiène, les polyamides, les polyimides, les polyesterimides, les polyétherimides et les polyamideimides.

5. Procédé selon l'une quelconque des revendications précédentes, **caractérisé en ce que** le lubrifiant solide est du graphite ou du sulfure de molybdène ou du PTFE.

6. Procédé selon l'une quelconque des revendications précédentes, **caractérisé en ce que** le solvant comprend un mélange de solvants, lequel contient environ 2,5 % en poids de 2-méthyl-2-pentanole-4-one, environ 20,5 % en poids de diméthylbenzène, environ 1,5 % en poids de toluène et environ 50,5 % en poids de N-méthylpyrrolidone, par rapport au poids total du mélange.

7. Procédé selon la revendication 6, **caractérisé en ce que** les pourcentages des composants du mélange de solvants sont déterminés en fonction de la part de matière polymère et de lubrifiant solide et de la viscosité du mélange prévue.

8. Procédé selon l'une quelconque des revendications précédentes, **caractérisé en ce que** le mélange est appliqué comme solution de la matière polymère, le lubrifiant solide étant tenu en suspension dans la solution et le solvant étant éliminé en particulier par échauffement.

9. Procédé selon l'une quelconque des revendications précédentes, **caractérisé en ce que** le mélange est appliqué sur les flancs des dents au moyen d'un processus de pulvérisation.

10. Procédé selon l'une quelconque des revendications précédentes, **caractérisé en ce que** le mélange appliqué est traité à une température d'environ 35° centigrades jusqu'à environ 240° centigrades.

11. Procédé selon l'une quelconque des revendications précédentes, **caractérisé en ce que** le mélange est appliqué d'un côté sur un segment de dent avec un angle de secteur de 30 degrés environ à 360 degrés environ sur les flancs des dents.

12. Procédé selon l'une quelconque des revendications précédentes, **caractérisé en ce que** le mélange est appliqué pour former un revêtement doté d'une épaisseur de couche d'environ 10 µm jusqu'à environ 100 µm, en particulier environ 30 µm.

13. Procédé selon l'une quelconque des revendications précédentes, **caractérisé en ce que** le mélange est appliqué avec une tolérance d'épaisseur de couche d'environ 20 µm.

14. Procédé selon la revendication 12 ou 13, **caractérisé en ce que** l'application du mélange est effectuée, en cas de besoin, à plusieurs reprises.

15. Procédé selon l'une quelconque des revendications précédentes, **caractérisé en ce que** le mélange est appliqué sur une roue dentée traitée avec une couche passivante, en particulier phosphatée.

16. Procédé selon l'une quelconque des revendications précédentes, **caractérisé en ce que** les partenaires d'engrènement pouvant être approchés l'un contre l'autre pour l'ajustage du jeu sont mis en appui en grande partie sans jeu avec une pression superficielle n'endommageant pas le revêtement durci.
